# EUROPEAN PATENT APPLICATION

(11) **EP 4 513 788 A1**
(43) Date of publication of application: **26.02.2025**
(21) Application number: 23791706.7
(22) Date of filing: 07.04.2023
(51) Int. Cl.: H04B 10/116, H04W 36/08

(54) **VISIBLE-LIGHT COMMUNICATION SYSTEM AND TERMINAL DEVICE**

(30) Priority: 18.04.2022 JP 2022068340
(71) Applicant: Kyocera Corporation, Kyoto-shi, Kyoto 612-8501 (JP)
(72) Inventor: FUKUTA, Noriyoshi, Kyoto-shi, Kyoto 612-8501 (JP); ADACHI, Hiroyuki, Kyoto-shi, Kyoto 612-8501 (JP)
(74) Representative: Viering, Jentschura & Partner mbB Patent- und Rechtsanwälte
(86) International application number: PCT/JP2023/014405
(87) International publication number: WO 2023/204057

(57) **Abstract**

A terminal apparatus includes multiple visible light communicators including a visible light communicator and a visible light communicator, and a controller configured to control the multiple visible light communicators. The multiple visible light communicators each have a directivity in a different direction. The controller is configured to perform simultaneous communication control of the visible light communicators, the visible light communicator performing visible light communication with a base station apparatus and the visible light communicator performing visible light communication with a base station apparatus.

## Description

### TECHNICAL FIELD

The present disclosure relates to a visible light communication system and a terminal apparatus.

### BACKGROUND OF INVENTION

Visible light communication is known that uses a visible light as a transmission medium, for example, in underwater communication. Since a visible light has high directivity, in known visible light communications, communication is generally performed with a transmission side and a reception side of a visible light signal facing each other on the assumption that the transmission side and the reception side are fixed.

### CITATION LIST

### PATENT LITERATURE

Patent Document 1: JP 4-103232 A

### SUMMARY

In a first aspect, a visible light communication system is a system configured to perform visible light communication between a terminal apparatus and a base station apparatus. The terminal apparatus includes multiple visible light communicators including a first visible light communicator and a second visible light communicator, and a controller configured to control the multiple visible light communicators. The multiple visible light communicators each have a directivity in a different direction. The controller is configured to perform simultaneous communication control of the first visible light communicator and the second visible light communicator, the first visible light communicator performing visible light communication with a first base station apparatus and the second visible light communicator performing visible light communication with a second base station apparatus.

In a second aspect, a terminal apparatus is an apparatus configured to perform visible light communication with a base station apparatus. The terminal apparatus includes multiple visible light communicators including a first visible light communicator and a second visible light communicator, and a controller configured to control the multiple visible light communicators. The multiple visible light communicators each have a directivity in a different direction. The controller is configured to perform simultaneous communication control of the first visible light communicator and the second visible light communicator, the first visible light communicator performing visible light communication with a first base station apparatus and the second visible light communicator performing visible light communication with a second base station apparatus.

### BRIEF DESCRIPTION OF THE DRAWINGS

FIG. 1 is a diagram illustrating a configuration of a visible light communication system according to an embodiment.
FIG. 2 is a diagram illustrating an operation scenario of the visible light communication system according to the embodiment.
FIG. 3 is a diagram illustrating an operation scenario of the visible light communication system according to the embodiment.
FIG. 4 is a diagram illustrating a configuration of a terminal apparatus according to the embodiment.
FIG. 5 is a table representing an example of association information according to the embodiment.
FIG. 6 is a table representing an example of a format of a report visible light signal according to the embodiment.
FIG. 7 is a diagram illustrating an appearance configuration example of the terminal apparatus according to the embodiment.
FIG. 8 is a diagram illustrating a configuration of a base station apparatus according to the embodiment.
FIG. 9 is a diagram illustrating an appearance configuration example of the base station apparatus according to the embodiment.
FIG. 10 is a diagram illustrating an operation example of a visible light communication system according to a first embodiment.
FIG. 11 is a diagram for illustrating a variation of the first embodiment.
FIG. 12 is a diagram for illustrating a variation of the first embodiment.
FIG. 13 is a diagram illustrating an operation scenario of a visible light communication system according to a second embodiment.
FIG. 14 is a diagram illustrating a specific example of combining processing (buffer combining processing) in a base station apparatus according to the second embodiment.
FIG. 15 is a diagram illustrating a specific example of the combining processing (buffer combining processing) in the base station apparatus according to the second embodiment.
FIG. 16 is a diagram illustrating an operation example of the visible light communication system according to the second embodiment.
FIG. 17 is a diagram illustrating an operation example of the visible light communication system according to a variation of the second embodiment.
FIG. 18 is a diagram illustrating an operation example of the visible light communication system according to the variation of the second embodiment.
FIG. 19 is a diagram illustrating a configuration of a visible light communication system according to a different embodiment.
FIG. 20 is a diagram illustrating a configuration of a visible light communication system according to a different embodiment.
FIG. 21 is a diagram illustrating an appearance configuration example of a terminal apparatus according to a different embodiment.
FIG. 22 is a diagram illustrating an appearance configuration example of a terminal apparatus according to a different embodiment.

### DESCRIPTION OF EMBODIMENTS

In a visible light communication system, a terminal apparatus is desirably able to perform simultaneous communication with multiple base station apparatuses (i.e., multi-base station communication) as in general cellular communication. However, unlike radio waves, which are transmission media of general cellular communication, a visible light has very high directivity, and thus the multi-base station communication is difficult to achieve in the visible light communication system.

The present disclosure is to enable multi-base station communication to be achieved while using a visible light as a transmission medium.

A communication apparatus according to each embodiment is described with reference to the drawings. In the description of the drawings, the same or similar parts are denoted by the same or similar reference signs.

### (1) Overview of Embodiments

(1.1) In a first aspect, a visible light communication system is a system configured to perform visible light communication between a terminal apparatus and a base station apparatus. The terminal apparatus includes multiple visible light communicators including a first visible light communicator and a second visible light communicator, and a controller configured to control the multiple visible light communicators. The multiple visible light communicators each have a directivity in a different direction. The controller is configured to perform simultaneous communication control of the first visible light communicator and the second visible light communicator, the first visible light communicator performing visible light communication with a first base station apparatus and the second visible light communicator performing visible light communication with a second base station apparatus.

As described above, since the multiple visible light communicators of the terminal apparatus have respective directivities in different directions, the terminal apparatus can perform the visible light communication in various directions. The controller of the terminal apparatus is configured to perform simultaneous communication control such that the first visible light communicator performs visible light communication with the first base station apparatus while the second visible light communicator performs visible light communication with the second base station apparatus, whereby the terminal apparatus can perform simultaneous communication (multi-base station communication) with the first base station apparatus and the second base station apparatus. Therefore, the visible light communication system can be provided that enables the multi-base station communication to be achieved while using a visible light as a transmission medium.

(1.2) In a second aspect of the visible light communication system, in the visible light communication system according to the first aspect, each of the multiple visible light communicators includes at least one light emitting element, at least one light receiving element, and a transceiver configured to perform transmission and reception processing on a visible light signal by using the light emitting element and the light receiving element.

Accordingly, each of the visible light communicators of the terminal apparatus can perform visible light communication independently of other visible light communicators, thereby enabling visible light communication using the multiple visible light communicators simultaneously (multi-base station communication).

(1.3) In a third aspect of the visible light communication system, in the visible light communication system according to the first or second aspect, the controller is configured to perform measurement processing on pilot visible light signals that the multiple visible light communicators receive from each of base station apparatuses while the first visible light communicator is performing visible light communication with the first base station apparatus.

Accordingly, a handover candidate can be detected, or whether to perform handover can be determined.

(1.4) In a fourth aspect of the visible light communication system, in the visible light communication system according to the third aspect, the controller is configured to perform the measurement processing in response to a trigger condition configured by the first base station apparatus being satisfied or in response to a movement of the terminal apparatus being detected.

Accordingly, the measurement processing can be performed at an appropriate timing.

(1.5) In a fifth aspect of the visible light communication system, in the visible light communication system according to the third or fourth aspect, a pilot visible light signal of the pilot visible light signals is a visible light signal including a pilot signal sequence. A base station apparatus of the base station apparatuses is configured to include the pilot signal sequence in the pilot visible light signal of the base station apparatus, the pilot signal sequence being different from the pilot signal sequence used by another base station apparatus near the base station apparatus.

Accordingly, the terminal apparatus can distinguish each base station apparatus from other base station apparatuses, based on the pilot signal sequence.

(1.6) In a sixth aspect of the visible light communication system, in the visible light communication system according to any one of the third to fifth aspects, the controller is configured to control the first visible light communicator to transmit to the first base station apparatus a report visible light signal including a result of measurement on the pilot visible light signals of the base station apparatuses.

Accordingly, the first base station apparatus in communication with the terminal apparatus can grasp a reception state from each base station apparatus in the terminal apparatus.

(1.7) In a seventh aspect of the visible light communication system, in the visible light communication system according to the sixth aspect, the controller is configured to control the first visible light communicator to transmit the report visible light signal to the first base station apparatus in response to the result of measurement satisfying a threshold condition or in a periodic manner.

Accordingly, the terminal apparatus can transmit the report visible light signal to the first base station apparatus at appropriate timing.

(1.8) In an eighth aspect of the visible light communication system, in the visible light communication system according to the sixth or seventh aspect, the multiple visible light communicators are configured to receive broadcast visible light signals from the base station apparatuses. A broadcast visible light signal of the broadcast visible light signals includes information indicating an orientation and/or turbulence of the base station apparatus having transmitted the broadcast visible light signal. The controller is configured to correct the result of measurement depending on the information included in the broadcast visible light signal.

Accordingly, a base station state such as the orientation and the turbulence of each base station apparatus can be reflected in the report visible light signal, and a base station apparatus capable of stably performing the visible light communication is easily decided as a target base station (second base station apparatus) for multi-base station communication.

(1.9) In a ninth aspect of the visible light communication system, in the visible light communication system according to any one of the sixth to eighth aspects, the controller is configured to further include information in the report visible light signal, the information indicating whether the terminal apparatus is capable of performing simultaneous communication, while communicating with the first visible light communicator, for each of base station apparatuses other than the first base station apparatus.

Accordingly, the first base station apparatus in communication with the terminal apparatus can appropriately decide another base station apparatus that can be used for multi-base station communication.

(1.10) In a tenth aspect of the visible light communication system, in the visible light communication system according to any one of the sixth to ninth aspects, the controller is configured to further include information indicating a movement state of the terminal apparatus in the report visible light signal.

Accordingly, the multi-base station communication is easy to appropriately control in consideration of the movement state of the terminal apparatus.

(1.11) In an eleventh aspect of the visible light communication system, in the visible light communication system according to the tenth aspect, the controller is configured to determine the movement state depending on a reception status of the pilot visible light signals at the multiple visible light communicators.

Accordingly, the movement state of the terminal apparatus is easy to appropriately determine.

(1.12) In a twelfth aspect of the visible light communication system, in the visible light communication system according to any one of the third to eleventh aspects, the controller is configured to generate association information associating a visible light communicator of the multiple visible light communicators having received a pilot visible light signal of the pilot visible light signals with the base station apparatus having transmitted the pilot visible light signal.

Accordingly, the multiple visible light communicators can be individually used for each base station apparatus.

(1.13) In a thirteenth aspect of the visible light communication system, in the visible light communication system according to the twelfth aspect, the first visible light communicator is configured to receive, from the first base station apparatus, an indication visible light signal including a communication indication designating the second base station apparatus. The controller is configured to select a visible light communicator of the multiple visible light communicators associated with the second base station apparatus, based on the association information in response to receiving the indication visible light signal, and establish communication with the second base station apparatus using the selected visible light communicator.

Accordingly, the terminal apparatus can perform the multi-base station communication using the appropriate visible light communicator.

(1.14) In a fourteen aspect of the visible light communication system, in the visible light communication system according to the thirteenth aspect, the indication visible light signal includes the communication indication indicating to the terminal apparatus to transmit, to the second base station apparatus, information identical to information transmitted from the terminal apparatus to the first base station apparatus. The controller is configured to control the first visible light communicator and the second visible light communicator to transmit identical pieces of information to the first base station apparatus and the second base station apparatus in response to receiving the indication visible light signal.

Accordingly, the information to be transmitted can have redundancy, thereby improving communication quality.

(1.15) In a fifteenth aspect of the visible light communication system, in the visible light communication system according to the thirteenth aspect, the indication visible light signal includes the communication indication indicating to the terminal apparatus to transmit, to the second base station apparatus, information different from information transmitted from the terminal apparatus to the first base station apparatus. The controller is configured to control the first visible light communicator and the second visible light communicator to transmit different pieces of information to the first base station apparatus and the second base station apparatus in response to receiving the indication visible light signal.

Accordingly, two information streams can be simultaneously transmitted, thereby improving communication speed.

(1.16) In a sixteenth aspect of the visible light communication system, in the visible light communication system according to the fourteenth or fifteenth aspect, the second base station apparatus is configured to transfer the information received by the second base station apparatus from the terminal apparatus, to the first base station apparatus. The first base station apparatus is configured to perform combining processing on the information received by the first base station apparatus from the terminal apparatus and the information received by the first base station apparatus from the second base station apparatus.

Accordingly, the pieces of information transmitted to different base station apparatuses can be combined by one base station apparatus.

(1.17) In a seventeenth aspect of the visible light communication system, in the visible light communication system according to any one of the twelfth to sixteenth aspects, the controller is configured to update the association information in response to detection of a rotation of the terminal apparatus.

Accordingly, the association between the visible light communicator and the base station apparatus can be appropriately updated even when the terminal apparatus rotates.

(1.18) In an eighteenth aspect of the visible light communication system, in the visible light communication system according to the seventeenth aspect, the terminal apparatus further includes a sensor to generate orientation information of the terminal apparatus. The controller is configured to update the association information, based on the orientation information.

Accordingly, the association between the visible light communicator and the base station apparatus can be appropriately updated based on the orientation information even when the terminal apparatus rotates.

(1.19) In a nineteenth aspect of the visible light communication system, in the visible light communication system according to the seventeenth aspect, the controller is configured to re-execute the measurement processing in response to detection of the rotation, and update the association information depending on a result of the re-executed measurement processing. The controller may re-execute the measurement processing in response to the orientation information according to the eighteenth aspect changing, and update the association information depending on a result of the re-executed measurement processing.

Accordingly, the association between the visible light communicator and the base station apparatus can be appropriately updated based on the result of the measurement of the pilot visible light signal even when the terminal apparatus rotates.

(1.20) In a twentieth aspect, a terminal apparatus is an apparatus configured to perform visible light communication with a base station apparatus. The terminal apparatus includes multiple visible light communicators including a first visible light communicator and a second visible light communicator, and a controller configured to control the multiple visible light communicators. The multiple visible light communicators each have a directivity in a different direction. The controller is configured to perform simultaneous communication control of the first visible light communicator and the second visible light communicator, the first visible light communicator performing visible light communication with a first base station apparatus and the second visible light communicator performing visible light communication with a second base station apparatus.

### (2) First Embodiment

A first embodiment is described first. A visible light communication system according to the first embodiment is a communication system that performs underwater visible light communication. Although undersea visible light communication is mainly assumed below as the underwater visible light communication, the underwater visible light communication may be visible light communication in a lake or a river. Note that the visible light communication system according to the first embodiment may be applied not only to underwater visible light communication but also to terrestrial (or space) visible light communication.

### (2.1) Configuration of Visible Light Communication System

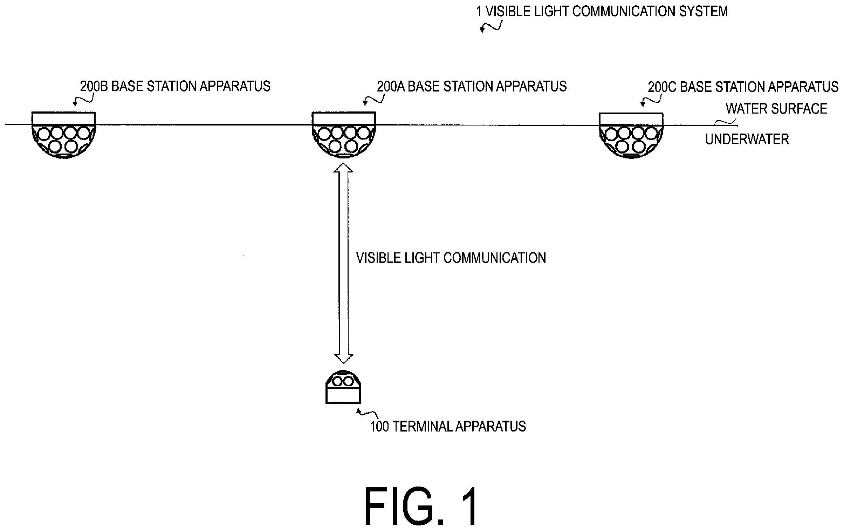

FIG. 1 is a diagram illustrating a configuration of a visible light communication system 1 according to the first embodiment. The visible light communication system 1 includes a terminal apparatus 100 and multiple base station apparatuses 200. Although FIG. 1 illustrates three base station apparatuses 200 (200A, 200B, 200C) as the multiple base station apparatuses 200, the number of base station apparatuses 200 may be two or four or more. Although one terminal apparatus 100 is illustrated, the number of terminal apparatuses 100 may be two or more.

In the example of FIG. 1, each base station apparatus 200 is on a water surface. For example, each base station apparatus 200 is fixed to a buoy. Each base station apparatus 200 is connected to a network via a backhaul line. The backhaul line may be a wireless or wired line. In order to efficiently secure a communication area underwater, each base station apparatus 200 is installed at a predetermined distance from other adjacent base station apparatuses 200. For example, each base station apparatus 200 may be temporarily installed during a period in which an underwater investigation using the terminal apparatus 100 is performed.

The terminal apparatus 100 is underwater. The terminal apparatus 100 performs visible light communication (to be more specific, underwater visible light communication) with the base station apparatus 200A. That is, the base station apparatus 200A is a serving base station for the terminal apparatus 100. The terminal apparatus 100 transmits uplink data to the base station apparatus 200A through the visible light communication. The terminal apparatus 100 receives downlink data from the base station apparatus 200A through the visible light communication. The terminal apparatus 100 is configured to be movable underwater. The terminal apparatus 100 moving underwater performs visible light communication with the base station apparatus 200 located above (including obliquely above) the terminal apparatus 100.

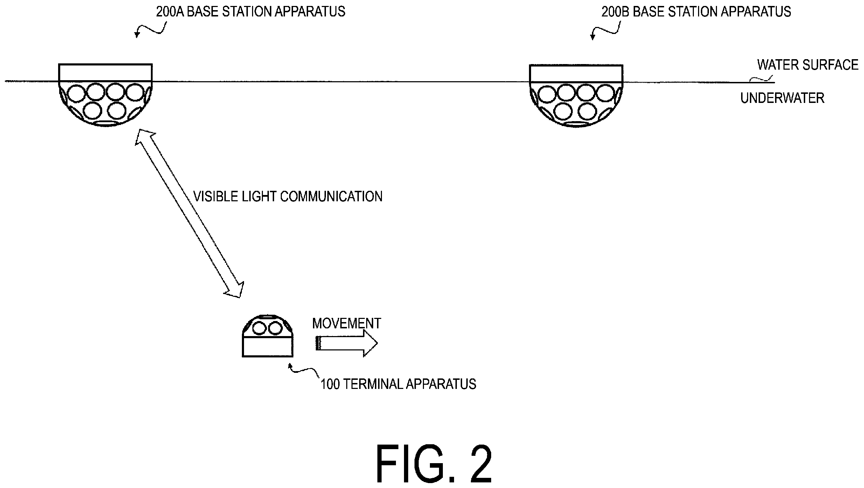

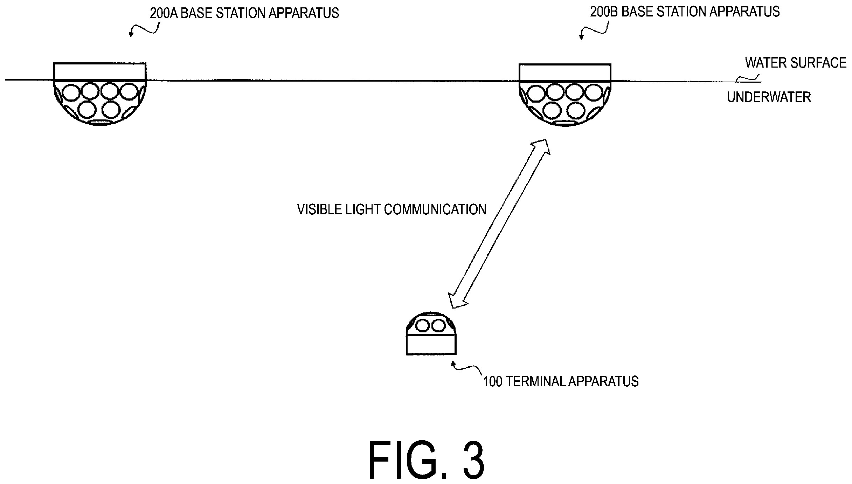

In the first embodiment, in the visible light communication system 1 like this, the movable terminal apparatus 100 can be handed over between the base station apparatuses 200. As illustrated in FIG. 2, the terminal apparatus 100 moves closer to the base station apparatus 200B while performing the visible light communication with the base station apparatus 200A. In this case, the base station apparatus 200A decides the base station apparatus 200B as a target base station for handover, based on a report visible light signal from the terminal apparatus 100, and performs control so that the terminal apparatus 100 is handed over to the base station apparatus 200B. As a result, as illustrated in FIG. 3, the terminal apparatus 100 establishes visible light communication with base station apparatus 200B to perform the visible light communication with base station apparatus 200B.

Each base station apparatus 200 transmits a pilot visible light signal including a pilot signal sequence different from a pilot signal sequence used by an adj acent base station apparatus 200. The pilot visible light signal is a visible light signal used by the terminal apparatus 100 for discovery for the base station apparatus 200, synchronization with the base station apparatus 200, and measurement on the base station apparatus 200. The pilot visible light signal may include a synchronization visible light signal and a reference visible light signal. The synchronization visible light signal is a visible light signal used by the terminal apparatus 100 to discover and synchronize with the base station apparatus 200. The synchronization visible light signal may be configured to be able to identify an identifier (ID) of the base station apparatus 200 having transmitted the signal. The reference visible light signal is a visible light signal used by the terminal apparatus 100 for measurement on the base station apparatus 200.

### (2.2) Configuration of Terminal Apparatus

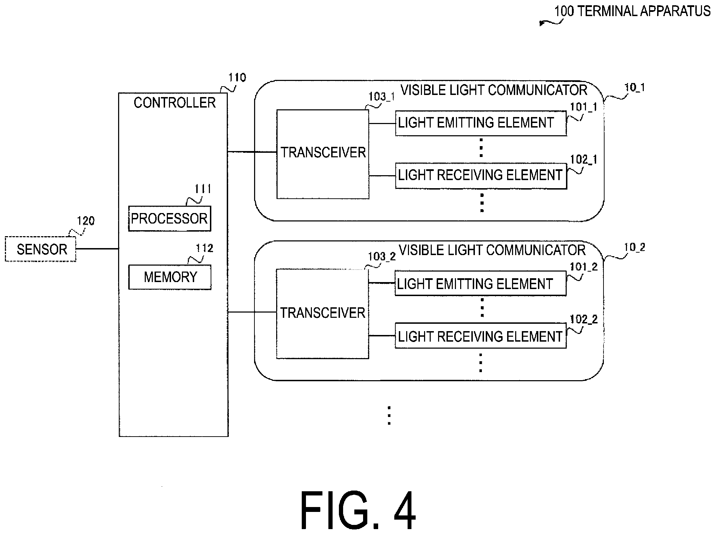

FIG. 4 is a diagram illustrating a configuration of the terminal apparatus 100 according to the first embodiment. The terminal apparatus 100 includes multiple visible light communicators 10 (10_1, 10_2, ...) and a controller 110. The terminal apparatus 100 may include a sensor 120. The terminal apparatus 100 may include a moving mechanism (e.g., a motor and a screw) used for the terminal apparatus 100 to move. The terminal apparatus 100 may include a battery to supply electric power necessary for the terminal apparatus 100 to operate.

The multiple visible light communicators 10 have respective directivities in different directions. That is, the multiple visible light communicators 10 transmit visible light signals in different directions and receive visible light signals from different directions. Each visible light communicator 10 includes at least one light emitting element 101, at least one light receiving element 102, and a transceiver 103. For example, the visible light communicator 10_1 includes at least one light emitting element 101_1, at least one light receiving element 102_1, and a transceiver 103_1.

The light emitting element 101 may be a laser diode or a light emitting diode. The light emitting element 101 converts an electrical signal (transmission signal) output by the transceiver 103 for visible light communication into a visible light signal and transmits the visible light signal.

The light receiving element 102 may be a photodiode. The light receiving element 102 receives a visible light signal, converts the received visible light signal into an electric signal (reception signal), and outputs the reception signal to the transceiver 103.

The transceiver 103 may be a Field-Programmable Gate Array (FPGA) and/or a System on a Chip (SoC). The transceiver 103 includes a transmitter that performs signal processing on a transmission signal output from the controller 110 and converts the signal after the signal processing. The transceiver 103 includes a receiver that converts a reception signal output by the light receiving element 102, performs signal processing on the converted reception signal, and outputs the processed reception signal to the controller 110.

As described above, since the multiple visible light communicators 10 have respective directivities in different directions and each visible light communicator 10 independently includes the transceiver 103, the terminal apparatus 100 can simultaneously perform visible light communication in various directions.

The controller 110 controls an overall operation of the terminal apparatus 100. For example, the controller 110 controls each visible light communicator 10. The controller 110 includes at least one processor 111 and at least one memory 112. The memory 112 stores a program to be executed by the processor 111 and information to be used for processing by the processor 111. The processor 111 may include a digital signal processor and a Central Processing Unit (CPU). The digital signal processor performs modulation and demodulation, coding and decoding, and the like on digital signals. The CPU executes the program stored in the memory to thereby perform various types of processing.

The sensor 120 detects parameters indicating a state of the terminal apparatus 100 (e.g., an orientation and/or a moving speed of the terminal apparatus 100) and outputs a detection result to the controller 110. The sensor 120 may include an acceleration sensor and/or a gyro sensor.

The terminal apparatus 100 configured as described above includes the multiple visible light communicators 10 including the visible light communicator 10_1 and the visible light communicator 10_2, and the controller 110 controlling the multiple visible light communicators 10. The multiple visible light communicators 10 have respective directivities in different directions. In the first embodiment, the controller 110 performs switching control to switch from a state in which the visible light communicator 10_1 performs visible light communication with the base station apparatus 200A to a state in which the visible light communicator 10_2 performs visible light communication with the base station apparatus 200B. Accordingly, the terminal apparatus 100 can be handed over from the base station apparatus 200A to the base station apparatus 200B.

While the visible light communicator 10_1 performs visible light communication with the base station apparatus 200A, the controller 110 performs measurement processing on a pilot visible light signal received by a corresponding one of the multiple visible light communicators 10 from each base station apparatus 200. For example, the controller 110 performs control to measure a reception signal strength of the pilot visible light signal (i.e., pilot received power) in the visible light communicator 10. The controller 110 manages the result of the measurement on the pilot visible light signal in association with the ID of the base station apparatus 200 having transmitted the pilot visible light signal. Here, the controller 110 may perform the measurement processing in response to a trigger condition configured by the base station apparatus 200A or in response to a movement of the terminal apparatus 100 being detected.

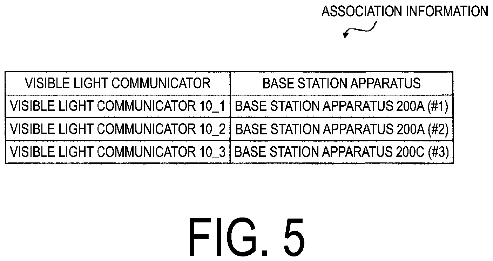

The controller 110 generates association information associating the visible light communicator 10 having received the pilot visible light signal with the base station apparatus 200 having transmitted the pilot visible light signal. FIG. 5 is a table representing an example of the association information. The association information is information that associates the visible light communicators 10 with the base station apparatuses 200. In the example of FIG. 5, the visible light communicator 10_1 is associated with ID "#1" of the base station apparatus 200A, the visible light communicator 10_2 is associated with ID "#2" of the base station apparatus 200B, and the visible light communicator 10_3 is associated with ID "#3" of the base station apparatus 200C.

The controller 110 controls the visible light communicator 10_1 to transmit a report visible light signal including a result of the measurement on the pilot visible light signal of each base station apparatus 200 to the base station apparatus 200A. Here, the controller 110 may control the visible light communicator 10_1 to transmit the report visible light signal to the base station apparatus 200A in response to the result of the measurement satisfying a threshold condition or periodically. Note that the report visible light signal may be referred to as a light reception strength measurement report.

Each of the multiple visible light communicators 10 may receive a broadcast visible light signal from each base station apparatus 200. The broadcast visible light signal includes information indicating an orientation (attitude) and/or turbulence of the base station apparatus 200 having transmitted the broadcast visible light signal (i.e., the base station state). The controller 110 corrects the result of measurement (pilot received power) depending on the information included in the broadcast visible light signal.

For example, when each base station apparatus 200 is turbulent, a propagation environment is assumed to greatly fluctuate between each base station apparatus 200 and the terminal apparatus 100. When measuring a strength of a light received from each base station apparatus 200, the controller 110 corrects a result of the measurement in consideration of the base station state (orientation, turbulence, and the like) of each base station apparatus 200. For example, the light reception strengths observed every time period corresponding to approximately a turbulence period of the base station apparatus 200 is averaged to obtain one sample, and a result obtained by taking a weighted average of the samples in a past fixed time period is reported to the base station apparatus 200A.

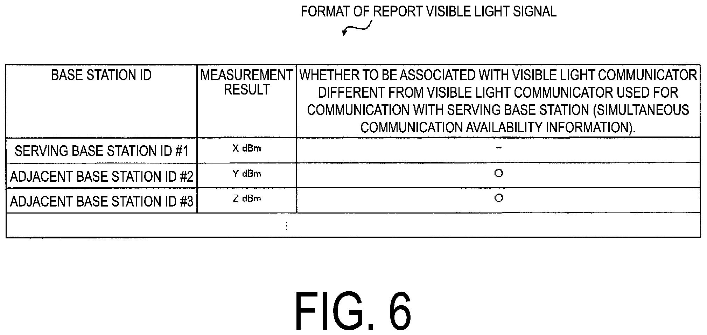

The controller 110 may further include information in the report visible light signal, the information indicating whether the visible light communicator 10 associated with each base station apparatus 200 other than the base station apparatus 200A is the same as the visible light communicator 10_1. FIG. 6 is a table representing an example of a format of a report visible light signal according to the embodiment. In the example of FIG. 6, the report visible light signal includes, for each measured base station apparatus 200, the ID of the base station apparatus 200, the result of the measurement on the pilot visible light signal of the base station apparatus 200, and the information indicating whether the base station apparatus 200 is associated with a visible light communicator 10 different from the visible light communicator 10 (the visible light communicator 10_1, in this example) used for the communication with the serving base station (hereinafter referred to as "simultaneous communication availability information").

Here, when the base station apparatus 200 is associated with any visible light communicator 10 different from the visible light communicator 10 (the visible light communicator 10_1, in this example) used for the communication with the serving base station, the terminal apparatus 100 can simultaneously perform visible light communication with the serving base station and visible light communication with the base station apparatus 200, and thus smooth handover to the base station apparatus 200 can be performed. The simultaneous communication availability information may be preference information indicating the base station apparatus 200 capable of simultaneous communication as the base station apparatus 200 desired by the terminal apparatus 100 as the target base station for handover.

The controller 110 may further include information (movement information) indicating the movement state of the terminal apparatus 100 in the report visible light signal. Accordingly, the serving base station can easily perform handover at appropriate timing in consideration of the movement state of the terminal apparatus 100. The controller 110 may determine the movement state of the terminal apparatus 100 depending on the reception status of the pilot visible light signal in each of the multiple visible light communicators 10. For example, the controller 110 may determine that the terminal apparatus 100 is moving, when the light receiving element 102 having the highest light reception strength has changed in a short time.

For example, for the terminal apparatus 100 that can be determined to be moving at a speed equal to or more than a certain threshold, handover is preferably initiated over at an earlier stage than usual. Therefore, when the terminal apparatus 100 is moving at a speed equal to or more than the threshold in a substantially fixed direction, the controller 110 adds the movement information of the terminal apparatus 100 to the light reception strength measurement report. The movement information may be a value indicating the moving speed of the terminal apparatus 100. The movement information may be an index indicating a degree of the movement speed (e.g., low speed, medium speed, or high speed) of the terminal apparatus 100. The movement information may be flag information indicating that the terminal apparatus 100 is in motion (in particular, being moving).

The controller 110 may determine the movement state of the terminal apparatus 100 using the number of handovers within a predetermined time and/or a detection result of the sensor 120 (e.g., an inertial sensor such as an acceleration sensor). The controller 110 may determine the movement state of the terminal apparatus 100 depending on, in addition to these determination indications, the reception status of the pilot visible light signal in each of the multiple visible light communicators 10. For example, when the base station apparatus 200 is turbulent and/or the terminal apparatus 100 is turbulent or rotating, the movement state is preferably determined in a composite manner, based on multiple indications rather than a single indication. For example, when the light receiving element having the highest light reception strength in the measurement sample has changed in a short time, the terminal apparatus 100, upon performing measurement in consideration of turbulence of the base station apparatus 200 in addition to the number of handovers and the inertial sensor information, can determine that the terminal apparatus 100 is moving in a direction in which the light receiving element having the highest light reception strength has changed.

In the first embodiment, the visible light communicator 10_1 receives the indication visible light signal including a handover command designating the base station apparatus 200B as the target base station for handover, from the base station apparatus 200A as the serving base station. The controller 110 selects the visible light communicator 10 associated with base station apparatus 200B, based on the association information (see FIG. 5) in response to receiving the indication visible light signal, and establishes communication with the base station apparatus 200B using the selected visible light communicator 10 (the visible light communicator 10_2, in this example). Accordingly, the terminal apparatus 100 after the handover can perform visible light communication with the base station apparatus 200B by using an appropriate visible light communicator 10 (the visible light communicator 10_2, in this example).

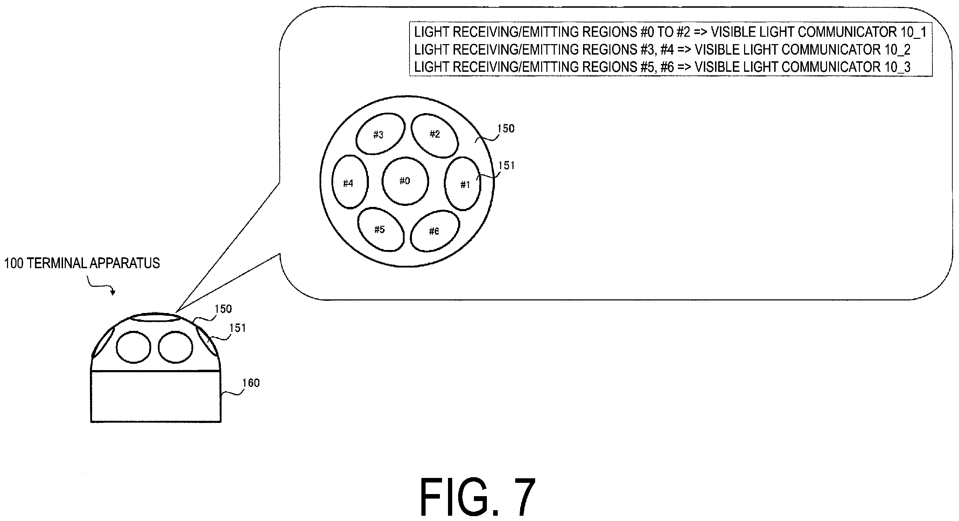

FIG. 7 is a diagram illustrating an appearance configuration example of the terminal apparatus 100 according to the first embodiment. The terminal apparatus 100 includes a hemispherical light receiver/emitter 150 and a body part 160 coupled to the light receiver/emitter 150. The light receiver/emitter 150 includes multiple light receiving/emitting regions 151 arranged in a distributed manner. Each light receiving/emitting region 151 is provided with a set of one light emitting element 101 and one light receiving element 102.

In the example of FIG. 7, the hemispherical light receiving receiver/emitter 150 includes a total of seven light receiving/emitting regions 151 including light receiving/emitting regions 151 #0 to 151 #6. For example, a group of the light receiving/emitting regions 151 #0 to 151 #2 constitutes a part of the visible light communicator 10_1. A group of the light receiving/emitting regions 151 #3 and 151 #4 constitutes a part of the visible light communicator 10_2. A group of the light receiving/emitting regions 151 #5 and 151 #6 constitutes a part of the visible light communicator 10_3.

### (2.3) Configuration of Base Station Apparatus

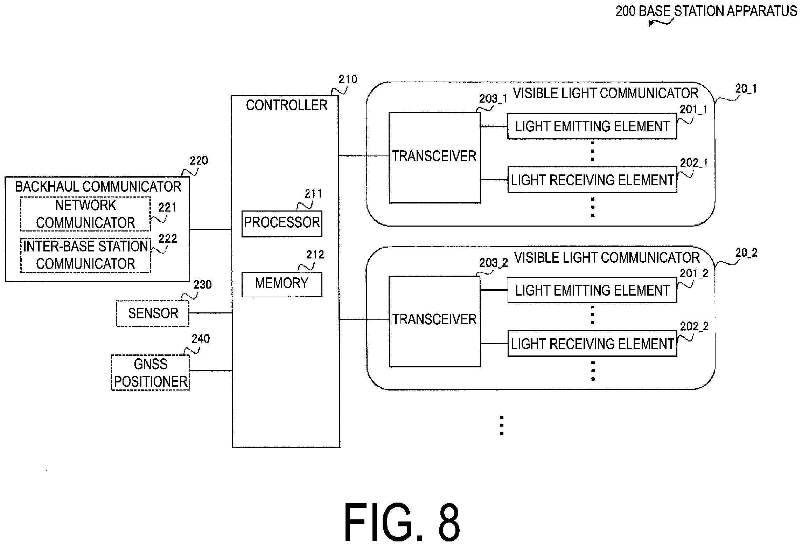

FIG. 8 is a diagram illustrating a configuration of the base station apparatus 200 according to the first embodiment. The base station apparatus 200 includes multiple visible light communicators 20 (20_1, 20_2, ...), a controller 210, and a backhaul communicator 220. The base station apparatus 200 may include a sensor 230 and a Global Navigation Satellite System (GNSS) positioner 240. The base station apparatus 200 may include a battery to supply electric power necessary for the base station apparatus 200 to operate.

The multiple visible light communicators 20 have respective directivities in different directions. That is, the multiple visible light communicators 20 transmit respective visible light signals in different directions and receive respective visible light signals from the different directions. Each visible light communicator 20 includes at least one light emitting element 201, at least one light receiving element 202, and a transceiver 203. For example, the visible light communicator 20_1 includes at least one light emitting element 201_1, at least one light receiving element 202_1, and a transceiver 203_1.

The light emitting element 201 may be a laser diode or a light emitting diode. The light emitting element 201 converts an electrical signal (transmission signal) output by the transceiver 203 for visible light communication into a visible light signal and transmits the visible light signal.

The light receiving element 202 may be a photodiode. The light receiving element 202 receives a visible light signal, converts the received visible light signal into an electric signal (reception signal), and outputs the reception signal to the transceiver 203.

The transceiver 203 may be an FPGA and/or an SoC. The transceiver 203 includes a transmitter that performs signal processing on a transmission signal output from the controller 210 and converts the signal after the signal processing. The transceiver 203 includes a receiver that converts a reception signal output by the light receiving element 202, performs signal processing on the converted reception signal, and outputs the processed reception signal to the controller 210.

As described above, since the multiple visible light communicators 20 have respective directivities in different directions and each visible light communicator 20 independently includes the transceiver 203, the base station apparatus 200 can simultaneously perform visible light communication in various directions.

The controller 210 controls an overall operation of the base station apparatus 200. For example, the controller 210 controls each visible light communicator 20. The controller 210 includes at least one processor 211 and at least one memory 212. The memory 212 stores a program to be executed by the processor 211 and information to be used for processing by the processor 211. The processor 211 may include a digital signal processor and a CPU. The digital signal processor performs modulation and demodulation, coding and decoding, and the like on digital signals. The CPU executes the program stored in the memory to thereby perform various types of processing.

The backhaul communicator 220 performs backhaul communication via a backhaul line under control of the controller 210. The backhaul communicator 220 may include a network communicator 221 that performs communication with a network (e.g., a core network), and an inter-base station communicator 222 that performs inter-base station communication with an adjacent base station.

The sensor 230 detects parameters indicating a state of the base station apparatus 200 (e.g., an orientation and/or turbulence of the base station apparatus 200) and outputs a detection result to the controller 210. The sensor 230 may include an acceleration sensor and/or a gyro sensor.

The GNSS positioner 240 performs positioning by receiving a satellite signal from a positioning satellite, acquires position information (coordinate information) indicating the position of the base station apparatus 200, and outputs the position information to the controller 210.

In the base station apparatus 200 configured as described above, the controller 210 performs control such that each visible light communicator 20 transmits a pilot visible light signal. The pilot visible light signal is a visible light signal including a pilot signal sequence. The controller 210 includes the pilot signal sequence in the pilot visible light signal of the base station apparatus 200, the pilot signal sequence being different from a pilot signal sequence used by another base station apparatus 200 near the base station apparatus 200. Accordingly, the terminal apparatus 100 can distinguish each base station apparatus 200 from other base station apparatuses 200 based on the pilot signal sequence.

For example, the controller 210 acquires the pilot signal sequence used by the base station apparatus 200 from the network using the backhaul communicator 220. The controller 210 may acquire the pilot signal sequence from the network when the base station apparatus 200 is installed. At this time, the network allocates a pilot signal sequence to the base station apparatus 200, based on the coordinate information of the base station apparatus 200 at the time of the installation, the pilot signal sequence being different from that of an adj acent base station.

The controller 210 may decide the pilot signal sequence to be used in the base station apparatus 200, based on the position information (the coordinate information) indicating the position of the base station apparatus 200. For example, when the GNSS position information is used, the controller 210 decides the pilot signal sequence, based on the values of the fourth and fifth places after the decimal point representing the accuracy of 1 to 10 meters. However, when the installation interval of the base station apparatus 200 is short, the identical pilot signal sequences may be decided for the base station apparatuses adjacent to each other. Therefore, in addition to the position information, the pilot signal sequence may be decided based on time information (e.g., time information of the time of power-on) indicating the timing at which the base station apparatus 200 is installed.

The controller 210 may acquire the pilot signal sequence used by another base station apparatus 200 from the terminal apparatus 100 connected to the base station apparatus 200, and decide the pilot signal sequence used by the base station apparatus 200, based on the pilot signal sequence acquired from the terminal apparatus 100. For example, depending on an indication (request) from the base station apparatus 200, the terminal apparatus 100 reports the pilot signal sequence of each pilot visible light signal received by the terminal apparatus 100 to the base station apparatus 200. The controller 210 may decide a pilot signal sequence different from the pilot signal sequence reported from the terminal apparatus 100 as the pilot signal sequence used by the base station apparatus 200.

The controller 210 may control each visible light communicator 20 to transmit a broadcast visible light signal. The broadcast visible light signal includes information indicating an orientation (attitude) and/or turbulence of the base station apparatus 200 (i.e., the base station state). The controller 210 can generate such information on the base station state based on the detection result of the sensor 230.

Any one of the visible light communicators 20 receives a report visible light signal (light reception strength measurement report) including a result of measurement on the pilot visible light signal of each base station apparatus 200 from the terminal apparatus 100. The report visible light signal may include the above-described simultaneous communication availability information. The controller 210 may preferentially select another base station apparatus 200 with which the terminal apparatus 100 can perform simultaneous communication, as the target base station apparatus for handover, based on the report visible light signal. The report visible light signal may include the movement information described above. The controller 210 may decide the handover at timing suitable for the movement state of the terminal apparatus 100, based on the movement information. For example, the controller 210 may initiate handover, at an earlier stage than usual, of the terminal apparatus 100 that can be determined to be moving at a speed equal to or more than a certain threshold. The controller 210 controls the visible light communicator 20 to transmit to the terminal apparatus 100 an indication visible light signal including a handover command designating the base station apparatus 200B as the target base station.

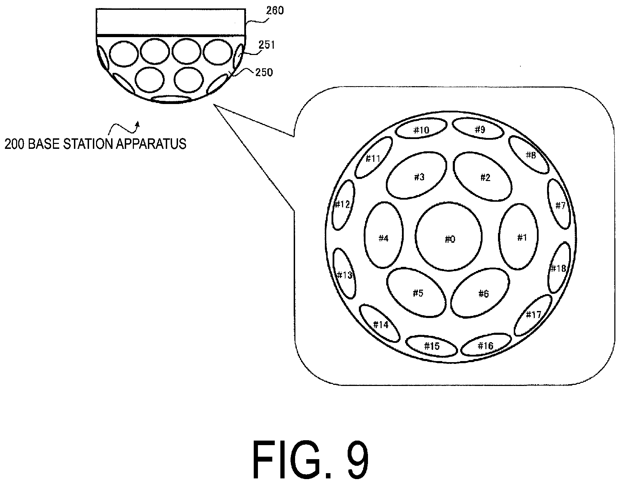

FIG. 9 is a diagram illustrating an appearance configuration example of the base station apparatus 200 according to the first embodiment. The base station apparatus 200 includes a hemispherical light receiver/emitter 250 and a body part 260 coupled to the light receiver/emitter 250. The light receiver/emitter 250 includes multiple light receiving/emitting regions 251 arranged in a distributed manner. Each light receiving/emitting region 251 is provided with a set of one light emitting element 201 and one light receiving element 202. In the example of FIG. 9, the hemispherical light receiving receiver/emitter 250 includes a total of 19 light receiving/emitting regions 251 including the light receiving/emitting regions 251 #0 to 251 #18. These light receiving/emitting regions 251 constitute a part of one visible light communicator 20 for each group including two or three adjacent light receiving/emitting regions 251.

### (2.4) Operation Example of Visible Light Communication System

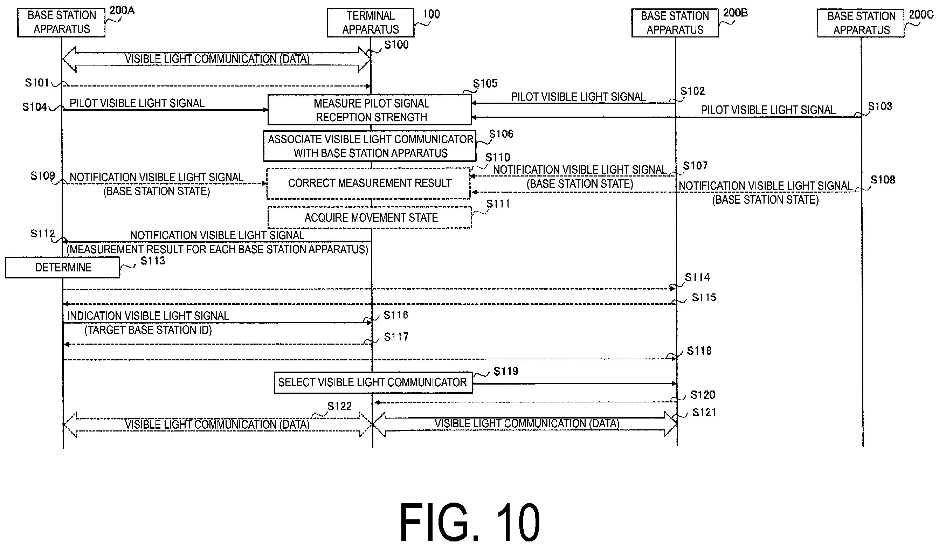

FIG. 10 is a diagram illustrating an operation example of the visible light communication system 1 according to the first embodiment.

In step S100, the terminal apparatus 100 performs visible light communication with the base station apparatus 200A as the serving base station to transmit and receive data to and from the base station apparatus 200A.

In step S101, the base station apparatus 200A may transmit a configuration visible light signal including measurement configuration information to the terminal apparatus 100. The measurement configuration information includes various configuration parameters related to measurement in the terminal apparatus 100 and reporting of a result of the measurement to the base station apparatus 200A. For example, the measurement configuration information includes at least one selected from the group consisting of a parameter for configuring a measurement trigger, a parameter for configuring a measurement period, a parameter for configuring a visible light (a color of a visible light) to be measured, and a parameter for configuring a measurement report trigger.

Here, the measurement trigger is a trigger for initiating measurement of the pilot signal strength in synchronization with the base station apparatus 200, and the terminal apparatus 100 initiates omnidirectional light reception when a measurement trigger condition is satisfied. For example, the measurement trigger may be the reception strength of the serving base station (base station apparatus 200A) becoming equal to or less than a threshold. The measurement trigger may be decided by the terminal apparatus 100. For example, the terminal apparatus 100 may initiate the measurement processing in response to detecting that the terminal apparatus 100 itself is moving in a specific direction, based on the detection result of the sensor 120 and/or the reception state of the pilot visible light signal in the visible light communicator 10 being used for visible light communication.

In step S102, the base station apparatus 200B transmits a pilot visible light signal. In step S103, the base station apparatus 200C transmits a pilot visible light signal. In step S104, the base station apparatus 200A transmits a pilot visible light signal.

In step S105, the terminal apparatus 100 receives the pilot visible light signal from each of the base station apparatuses 200A to 200C and performs the measurement processing (reception strength measurement) on each pilot visible light signal.

In step S106, the terminal apparatus 100 generates association information associating the visible light communicator 10 having received the pilot visible light signal with the base station apparatus 200 having transmitted the pilot visible light signal.

In step S107, the base station apparatus 200B may transmit a broadcast visible light signal. In step S108, the base station apparatus 200C may transmit a broadcast visible light signal. In step S109, the base station apparatus 200A may transmit a broadcast visible light signal.

In step S 110, the terminal apparatus 100 may receive the broadcast visible light signal from each of the base station apparatuses 200A to 200C, acquire base station state information included in each broadcast visible light signal, and correct the reception strength measurement of each base station apparatus 200, based on the acquired base station state information.

In step S 111, the terminal apparatus 100 may acquire the movement information indicating the movement state of the terminal apparatus 100.

In step S 112, the terminal apparatus 100 transmits a report visible light signal including the pilot reception strength of each base station apparatus 200 to the base station apparatus 200A. The terminal apparatus 100 may transmit the report visible light signal including the movement information. Here, the terminal apparatus 100 may transmit the report visible light signal to the base station apparatus 200A triggered by the pilot reception strength of the serving base station (the base station apparatus 200A) and/or the pilot reception strength of the adjacent base station (the base station apparatus 200B, the base station apparatus 200C) satisfying the threshold condition. The threshold may be configured for the terminal apparatus 100 by the serving base station (the base station apparatus 200A). The terminal apparatus 100 may decide the threshold.

In step S113, the base station apparatus 200A makes a handover determination, based on the report visible light signal from the terminal apparatus 100. Here, the description continues assuming that the base station apparatus 200A decides the base station apparatus 200B as the target base station.

In steps S 114 and S115, the base station apparatus 200A may perform communication for handover preparation with the base station apparatus 200B through backhaul communication. For example, in step S 114, the base station apparatus 200A may transmit a handover request including information of the terminal apparatus 100 to the base station apparatus 200B. In step S115, the base station apparatus 200B may transmit an acknowledgement (ACK) responding to the handover request to the base station apparatus 200A.

In step S116, the base station apparatus 200A transmits an indication visible light signal including a handover command designating the base station apparatus 200B to the terminal apparatus 100.

In step S117, the terminal apparatus 100 may transmit an acknowledgement responding to the indication visible light signal to the base station apparatus 200A. In step S118, the base station apparatus 200A may transmit a completion notification indicating that the handover preparation is completed to the base station apparatus 200B through backhaul communication.

In step S119, the terminal apparatus 100 selects the visible light communicator 10 associated with the base station apparatus 200B as the target base station, based on the association information, and establishes communication with the base station apparatus 200B.

In step S120, the base station apparatus 200B may transmit an indication visible light signal indicating uplink transmission to the terminal apparatus 100.

In step S121, the terminal apparatus 100 transmits and receives data to and from the base station apparatus 200B through the visible light communication. The terminal apparatus 100 may end the visible light communication with the base station apparatus 200A. The terminal apparatus 100 may continue the visible light communication with the base station apparatus 200A and perform simultaneous communication (multi-base station communication) with the base station apparatuses 200A and 200B. Details of the operation for performing the multi-base station communication is described in a second embodiment.

### (2.5) Variation of First Embodiment

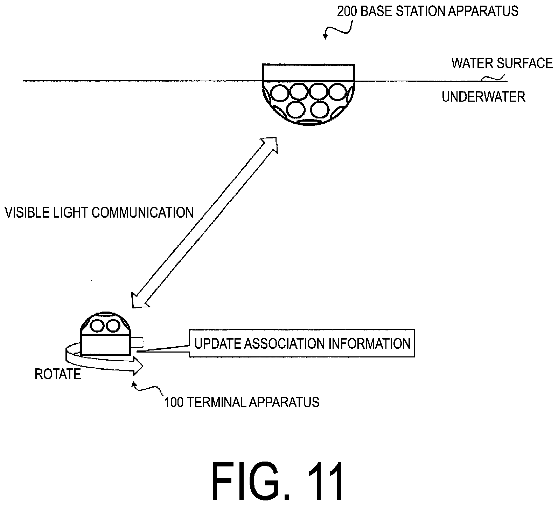

A variation of the first embodiment is described. As illustrated in FIG. 11, when the terminal apparatus 100 rotates underwater, the correspondence relationship between the visible light communicator 10 of the terminal apparatus 100 and the base station apparatus 200 needs to be updated. In this variation, the controller 110 of the terminal apparatus 100 updates the association information in response to a rotation of the terminal apparatus 100 being detected.

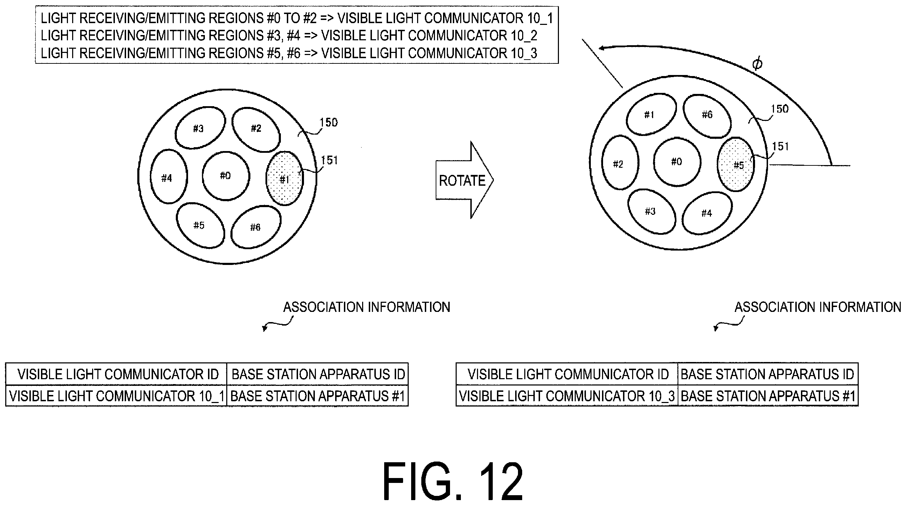

The terminal apparatus 100 includes the sensor 120 to generate orientation information of the terminal apparatus 100. The controller 110 of the terminal apparatus 100 updates the association information, based on the orientation information. For example, as illustrated in FIG. 12, assume that before the terminal apparatus 100 rotates, the light receiving/emitting region 151 #1 of the terminal apparatus 100 receives the pilot visible light signal from the base station apparatus 200 #1, and the visible light communicator 10_1 to which the light receiving/emitting region 151 #1 belongs is associated with the base station apparatus 200 #1. The controller 110 of the terminal apparatus 100 detects a rotation amount ϕ of the terminal apparatus 100 from a detection result (orientation information) of the sensor 120, and updates the association information, based on the rotation amount ϕ. As a result, after the terminal apparatus 100 rotates, the visible light communicator 10_3 to which the light receiving/emitting region 151 #5 belongs is associated with the base station apparatus 200 #1.

The controller 110 of the terminal apparatus 100 may re-execute the measurement processing of the pilot visible light signal in response to the rotation being detected (and/or the orientation information changing), and may update the association information depending on a result of the re-executed measurement processing. That is, the terminal apparatus 100 receives the pilot visible light signal from each base station apparatus 200, and updates the association information associating the visible light communicator 10 having received the pilot visible light signal with the base station apparatus 200 having transmitted the pilot visible light signal. When the terminal apparatus 100 continuously rotates, the controller of the terminal apparatus 100 may make the measurement period for the pilot visible light signal shorter than a reference period.

Note that this variation is also applicable to the second embodiment described later.

### (3) Second Embodiment

The second embodiment is described focusing on differences from the first embodiment and the variation thereof described above. In the second embodiment, a configuration of the visible light communication system 1, a configuration of the terminal apparatus 100, and a configuration of the base station apparatus 200 are the same as and/or similar to those in the first embodiment descried above.

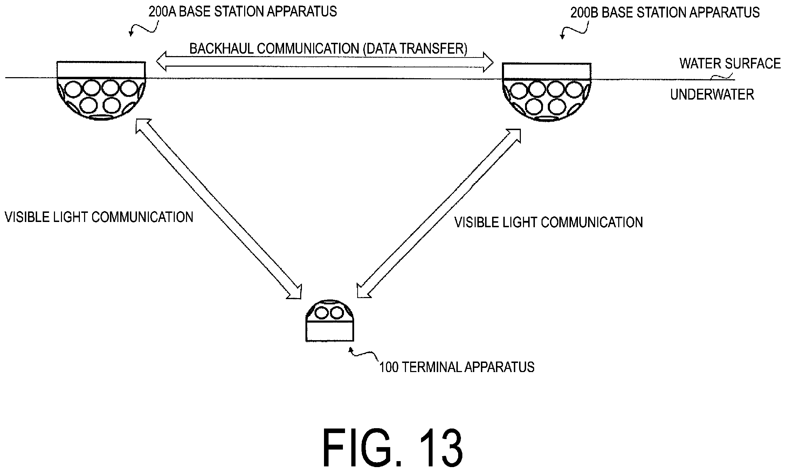

In the second embodiment, as illustrated in FIG. 13, the terminal apparatus 100 can perform simultaneous communication (that is, multi-base station communication) with the multiple base station apparatuses 200 (the base station apparatuses 200A and 200B). In the second embodiment, as illustrated in FIG. 4, the terminal apparatus 100 includes the multiple visible light communicators 10 including the visible light communicator 10_1 and the visible light communicator 10_2, and the controller 110 configured to control the multiple visible light communicators 10. The multiple visible light communicators 10 have respective directivities in different directions. The controller 110 performs simultaneous communication control such that the visible light communicator 10_1 performs visible light communication with the base station apparatus 200A while the visible light communicator 10_2 performs visible light communication with the base station apparatus 200B. Accordingly, the terminal apparatus 100 can perform simultaneous communication (multi-base station communication) with the base station apparatus 200A and the base station apparatus 200B.

Such multi-base station communication may be performed when the terminal apparatus 100 is handed over from the base station apparatus 200A to the base station apparatus 200B. For example, when the terminal apparatus 100 located at an edge of the communication area of the base station apparatus 200A performs multi-base station communication, the terminal apparatus 100 is continued to be connected for communication with both the base station apparatuses 200A and 200B until the terminal apparatus 100 is determined to completely move to be under the control of the base station apparatus 200B being the handover destination. Accordingly, the possibility of occurrence of communication disconnection can be minimized, and the communication quality can be improved. In the second embodiment below, the multi-base station communication in the uplink is mainly described, but the multi-base station communication in the downlink may be performed.

In the second embodiment, the controller 110 of the terminal apparatus 100 includes information in the report visible light signal, the information (simultaneous communication availability information) indicating whether the terminal apparatus 100 is capable of performing simultaneous communication while communicating with the visible light communicator 10_1 for each of the base station apparatuses 200 other than the base station apparatus 200A (see FIG. 6). Accordingly, the base station apparatus 200A in communication with the terminal apparatus 100 can appropriately decide another base station apparatus 200 that can be used for multi-base station communication.

In the second embodiment, the controller 110 of the terminal apparatus 100 includes the movement information indicating the movement state of the terminal apparatus 100 in the report visible light signal. When the terminal apparatus 100 is resting or moving at a low speed, the multi-base station communication is preferably continued even after the handover, whereas for the terminal apparatus 100 moving at a speed equal to or more than a certain threshold, the multi-base station communication is preferably ended at the time of the handover. Including the movement state in the report visible light signal allows the base station apparatus 200A to appropriately perform such determination.

In the second embodiment, the visible light communicator 10_1 of the terminal apparatus 100 receives the indication visible light signal including the communication indication designating the base station apparatus 200B from the base station apparatus 200A. The controller 110 of the terminal apparatus 100 selects the visible light communicator 10 associated with base station apparatus 200B, based on the association information (see FIG. 5) in response to receiving the indication visible light signal, and establishes communication with the base station apparatus 200B using the selected visible light communicator 10. Accordingly, the terminal apparatus 100 can perform the multi-base station communication using the appropriate visible light communicator 10.

In the second embodiment, the indication visible light signal may include the communication indication indicating to the terminal apparatus 100 that the terminal apparatus 100 is to transmit, to the base station apparatus 200B, information identical to information transmitted from the terminal apparatus 100 to the base station apparatus 200A. The controller 110 of the terminal apparatus 100 controls the visible light communicator 10_1 and the visible light communicator 10_2 to transmit identical pieces of information to the base station apparatus 200A and the base station apparatus 200B in response to receiving the indication visible light signal. Accordingly, the information to be transmitted can have redundancy, thereby improving communication quality.

The indication visible light signal may include the communication indication indicating to the terminal apparatus 100 that the terminal apparatus 100 is to transmit, to the base station apparatus 200B, information different from information transmitted from the terminal apparatus 100 to the base station apparatus 200A. The controller 110 of the terminal apparatus 100 controls the visible light communicator 10_1 and the visible light communicator 10_2 to transmit different pieces of information to the base station apparatus 200A and the base station apparatus 200B in response to receiving the indication visible light signal. Accordingly, two information streams can be simultaneously transmitted, thereby improving communication speed. Also, since the coding rate for obtaining a desired throughput can be lowered, the error correction capability can be improved.

In the second embodiment, the base station apparatus 200B transfers the information received by the base station apparatus 200B from the terminal apparatus 100, to the base station apparatus 200A. The base station apparatus 200A performs combining processing on the information received by the base station apparatus 200A from the terminal apparatus 100 and the information received by the base station apparatus 200A from the base station apparatus 200B. Accordingly, the pieces of information transmitted to different base station apparatuses 200 can be combined by one base station apparatus 200.

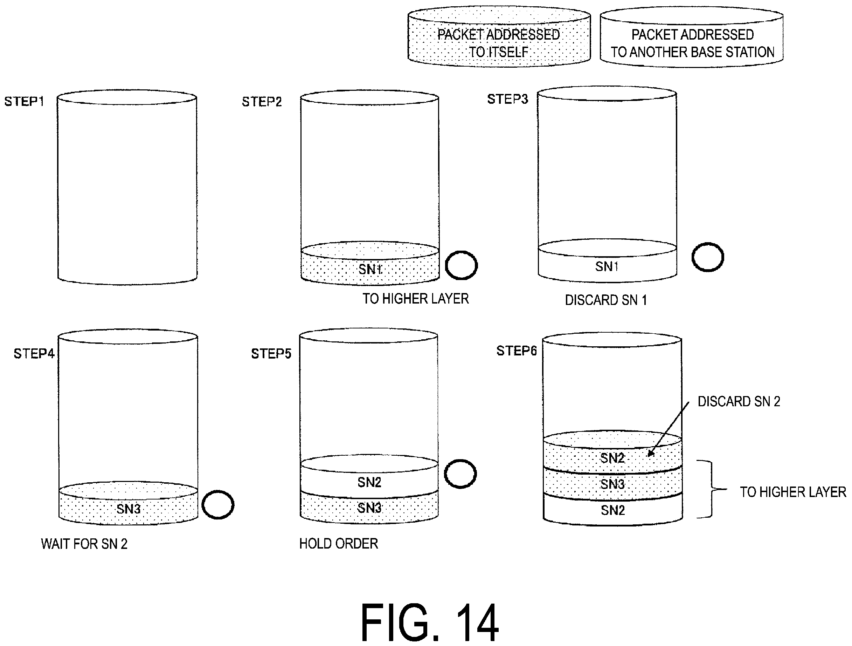

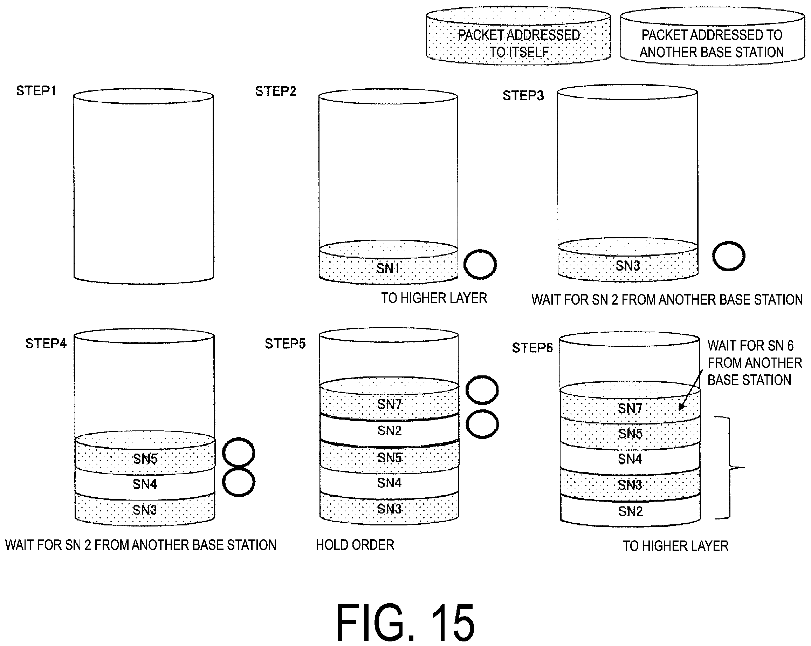

FIGs. 14 and 15 are diagrams illustrating specific examples of the combining processing (buffer combining processing) in the base station apparatus 200A. FIG. 14 illustrates an operation when the terminal apparatus 100 transmits identical pieces of information (identical data packet) to the base station apparatus 200A and the base station apparatus 200B.

As illustrated in FIG. 14, in STEP 1, a buffer of the base station apparatus 200A is empty. For example, the buffer is a layer 2 (L2) buffer.

In STEP 2, the base station apparatus 200A receives a data packet (SN 1) addressed to base station apparatus 200A from the terminal apparatus 100. Here, the SN represents a sequence number of a data packet. Since the SN 1 data packet is the first data packet and packet order control is not necessary, the base station apparatus 200A passes the SN 1 data packet in the buffer to a higher layer.

In STEP 3, the base station apparatus 200A receives, from the base station apparatus 200B, the data packet (SN 1) addressed to the base station apparatus 200B from the terminal apparatus 100. The base station apparatus 200A, which has already received the SN 1 data packet, discards the SN 1 data packet received from base station apparatus 200B.

In STEP 4, the base station apparatus 200A receives a data packet (SN 3) addressed to the base station apparatus 200A from the terminal apparatus 100. Note that an SN 2 data packet from the terminal apparatus 100 to the base station apparatus 200A is assumed to be delayed in a lower layer, for example. Since the base station apparatus 200A has not yet received the SN 2 data packet, the base station apparatus 200A holds the SN 3 data packet in the buffer and waits for arrival of the SN 2 data packet.

In STEP 5, the base station apparatus 200A receives, from the base station apparatus 200B, the data packet (SN2) addressed to the base station apparatus 200B from the terminal apparatus 100. The base station apparatus 200A holds the SN 2 data packet in accordance with the order of the SNs.

In STEP 6, the base station apparatus 200A receives the data packet (SN2) addressed to the base station apparatus 200A from the terminal apparatus 100. The base station apparatus 200A, which has already received the SN 2 data packet, discards the SN 2 data packet. The base station apparatus 200A passes the received SN 2 data packet and SN 3 data packet to the higher layer.

FIG. 15 illustrates an operation when the terminal apparatus 100 transmits different pieces of information (different data packets) to the base station apparatus 200A and the base station apparatus 200B. For example, the terminal apparatus 100 transmits a data packet having an odd-numbered SN to the base station apparatus 200A, and transmits a data packet having an even-numbered SN to the base station apparatus 200B.

As illustrated in FIG. 15, in STEP 1, the buffer of the base station apparatus 200A is empty. For example, the buffer is a layer 2 (L2) buffer.

In STEP 2, the base station apparatus 200A receives a data packet (SN 1) addressed to base station apparatus 200A from the terminal apparatus 100. Since the SN 1 data packet is the first data packet and packet order control is not necessary, the base station apparatus 200A passes the SN 1 data packet in the buffer to the higher layer.

In STEP 3, the base station apparatus 200A receives a data packet (SN 3) addressed to the base station apparatus 200A from the terminal apparatus 100. Not that an SN 2 data packet from the terminal apparatus 100 is assumed to be delayed in a lower layer of the base station apparatus 200B, for example. Since the base station apparatus 200A has not yet received the SN 2 data packet, the base station apparatus 200A holds the SN 3 data packet in the buffer and waits for arrival of the SN 2 data packet.

In STEP 4, the base station apparatus 200A receives, from the base station apparatus 200B, a data packet (SN 4) addressed to the base station apparatus 200B from the terminal apparatus 100. The base station apparatus 200A also receives a data packet (SN 5) addressed to the base station apparatus 200A from the terminal apparatus 100. However, since the base station apparatus 200A has not yet received the SN 2 data packet, the base station apparatus 200A holds the SN 4 data packet and the SN 5 data packet in the buffer and waits for arrival of the SN 2 data packet.

In STEP 5, the base station apparatus 200A receives, from the base station apparatus 200B, the data packet (SN2) addressed to the base station apparatus 200B from the terminal apparatus 100. The base station apparatus 200A also receives a data packet (SN 7) addressed to the base station apparatus 200A from the terminal apparatus 100. The base station apparatus 200A holds the SN 2 data packet in accordance with the order of the SNs.

In STEP 6, the base station apparatus 200A passes the SN 2 to SN 5 data packets to the higher layer.

In this way, the base station apparatus 200A performs the buffer combining processing in the multi-base station communication in the uplink. In the multi-base station communication in the downlink, the terminal apparatus 100 receives the identical or different packets from the base station apparatuses 200A and 200A, and performs therein buffer the combining processing at the terminal apparatus 100.

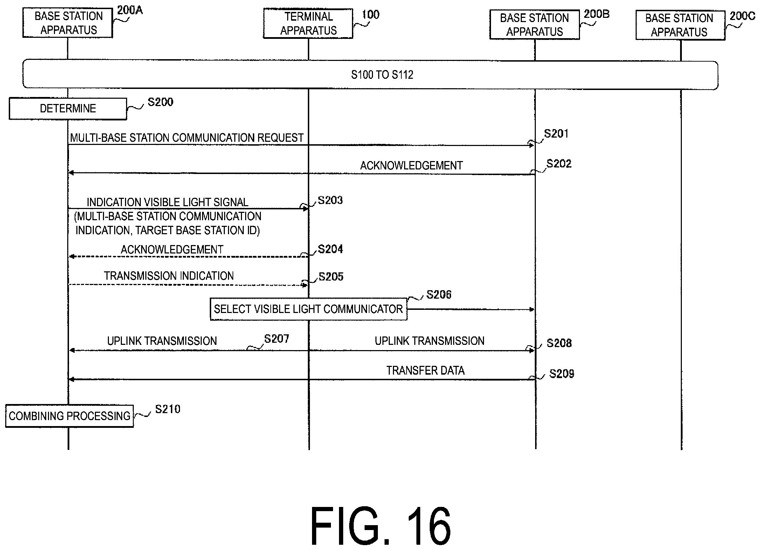

FIG. 16 is a diagram illustrating an operation example of the visible light communication system 1 according to the second embodiment.

As illustrated in FIG. 16, operations in steps S100 to S 112 are the same as, and/or similar to, those in the above-described first embodiment.

In step S200, the base station apparatus 200A makes multi-base station communication determination, based on the report visible light signal from the terminal apparatus 100. For example, the base station apparatus 200A specifies another base station apparatus 200 that can be used for multi-base station communication, based on the simultaneous communication availability information included in the report visible light signal. Here, the description continues assuming that the base station apparatus 200A decides the base station apparatus 200B as a target base station for multi-base station communication.

In step S201, the base station apparatus 200A transmits a multi-base station communication request including information of the terminal apparatus 100 to the base station apparatus 200B through backhaul communication.

In step S202, the base station apparatus 200B transmits an acknowledgement (ACK) responding to the multi-base station communication request to the base station apparatus 200A.

In step S203, the base station apparatus 200A transmits an indication visible light signal including a multi-base station communication indication designating the base station apparatus 200B to the terminal apparatus 100.

In step S204, the terminal apparatus 100 may transmit an acknowledgement responding to the indication visible light signal to the base station apparatus 200A.

In step S205, the base station apparatus 200A may transmit an indication visible light signal indicating uplink transmission to the terminal apparatus 100.

In step S206, the terminal apparatus 100 selects the visible light communicator 10 associated with the base station apparatus 200B as the target base station for multi-base station communication, based on the association information, and establishes communication with the base station apparatus 200B.

In steps S207 and S208, the terminal apparatus 100 transmits data (identical or different pieces of data) to the base station apparatuses 200A and 200B through the visible light communication.

In step S209, the base station apparatus 200B transfers the data received from the terminal apparatus 100 to the base station apparatus 200A through backhaul communication.

In step S210, the base station apparatus 200A performs the combining processing on the data received from the terminal apparatus 100 and the data received from the base station apparatus 200B.

### (3.1) Variation of Second Embodiment

A variation of the second embodiment is described focusing on differences from the second embodiment described above. In the variation, assume that multi-base station communication is performed during handover, and the multi-base station communication is ended after completion of the handover. Assume also that the combining processing is performed on the base station apparatus 200B side.

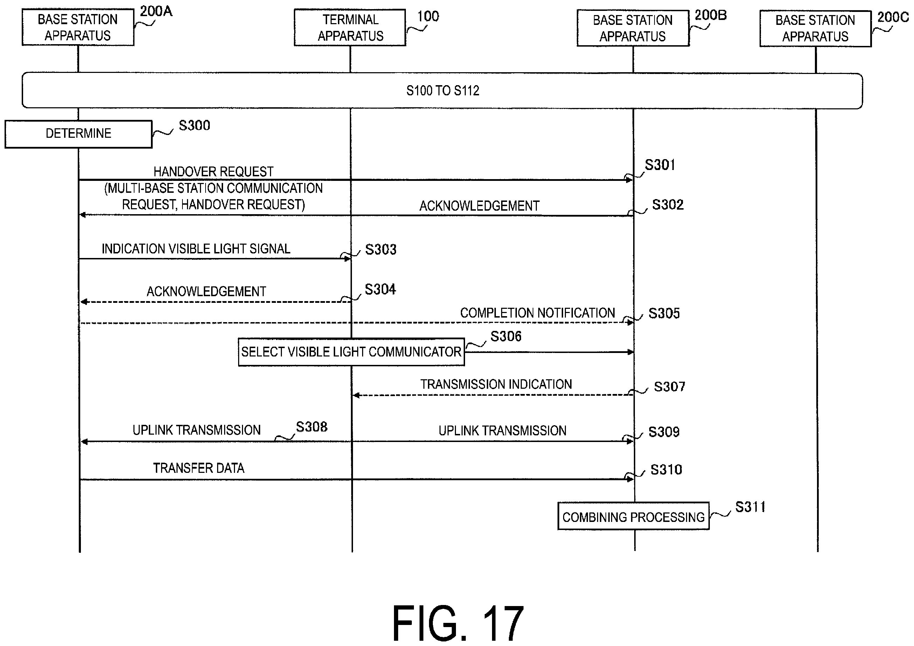

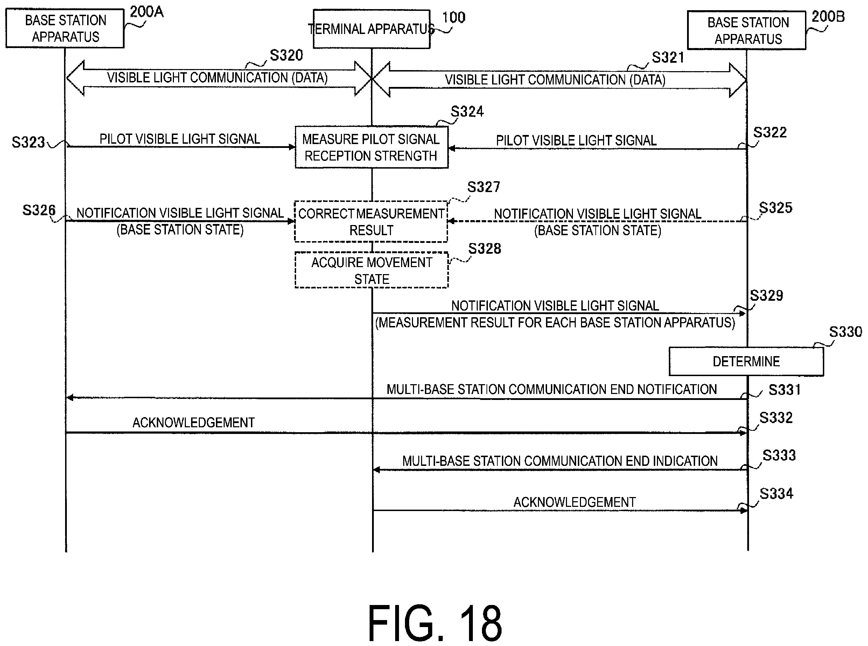

FIGs. 17 and 18 are diagrams illustrating an operation example of the visible light communication system 1 according to the variation of the second embodiment.

As illustrated in FIG. 17, operations in steps S100 to S112 are the same as, and/or similar to, those in the above-described first embodiment.

In step S300, the base station apparatus 200A makes handover determination and multi-base station communication determination, based on the report visible light signal from the terminal apparatus 100. Here, the description continues assuming that the base station apparatus 200A decides the base station apparatus 200B as the target base station for handover and multi-base station communication.

In step S301, the base station apparatus 200A transmits a request message including information of the terminal apparatus 100 to the base station apparatus 200B through backhaul communication. The request message includes a handover request and a multi-base station communication request.

In step S302, the base station apparatus 200B transmits an acknowledgement (ACK) responding to the request message to the base station apparatus 200A.

In step S303, the base station apparatus 200A transmits an indication visible light signal designating the base station apparatus 200B to the terminal apparatus 100. The indication visible light signal includes a handover command and a multi-base station communication indication.

In step S304, the terminal apparatus 100 may transmit an acknowledgement responding to the indication visible light signal to the base station apparatus 200A.

In step S305, the base station apparatus 200A may transmit a completion notification indicating completion of handover preparation to the base station apparatus 200B through backhaul communication.

In step S306, the terminal apparatus 100 selects the visible light communicator 10 associated with the base station apparatus 200B as the target base station for handover and multi-base station communication, based on the association information, and establishes communication with the base station apparatus 200B.

In step S307, the base station apparatus 200B may transmit an indication visible light signal indicating uplink transmission to the terminal apparatus 100.

In steps S308 and S309, the terminal apparatus 100 transmits data (identical or different pieces of data) to the base station apparatuses 200A and 200B through the visible light communication.

In step S310, the base station apparatus 200A transfers the data received from the terminal apparatus 100 to the base station apparatus 200B through backhaul communication.

In step S311, the base station apparatus 200B performs the combining processing on the data received from the terminal apparatus 100 and the data received from the base station apparatus 200A.

Thereafter, as illustrated in FIG. 18, in steps S320 and S321, the terminal apparatus 100 performs multi-base station communication with the base station apparatuses 200A and 200B to transmit and receive data to and from the base station apparatuses 200A and 200B.

In step S322, the base station apparatus 200B transmits a pilot visible light signal. In step S323, the base station apparatus 200A transmits a pilot visible light signal.

In step S324, the terminal apparatus 100 receives the pilot visible light signal from each of the base station apparatuses 200A and 200B and performs the measurement processing (reception strength measurement) on each pilot visible light signal.

In step S325, the base station apparatus 200B may transmit a broadcast visible light signal. In step S326, the base station apparatus 200A may transmit a broadcast visible light signal.

In step S327, the terminal apparatus 100 may receive the broadcast visible light signal from each of the base station apparatuses 200A and 200B, acquire base station state information included in each broadcast visible light signal, and correct the reception strength measurement of each base station apparatus 200, based on the acquired base station state information.

In step S328, the terminal apparatus 100 may acquire the movement information indicating the movement state of the terminal apparatus 100.

In step S329, the terminal apparatus 100 transmits a report visible light signal including the pilot reception strength of each base station apparatus 200 to the base station apparatus 200B. The terminal apparatus 100 may transmit the report visible light signal including the movement information.

In step S330, the base station apparatus 200B makes end determination of the multi-base station communication, based on the report visible light signal from the terminal apparatus 100. Here, the description continues assuming that that the base station apparatus 200B determines to end the multi-base station communication.

In step S331, the base station apparatus 200B transmits a multi-base station communication end notification to the base station apparatus 200A through backhaul communication.

In step S332, the base station apparatus 200A transmits an acknowledgement responding to the multi-base station communication end notification to the base station apparatus 200B through backhaul communication.

In step S333, the base station apparatus 200B transmits a multi-base station communication end indication to the terminal apparatus 100.

In step S334, the terminal apparatus 100 transmits an acknowledgement responding to the multi-base station communication end notification to the base station apparatus 200B.

### (4) Other Embodiments

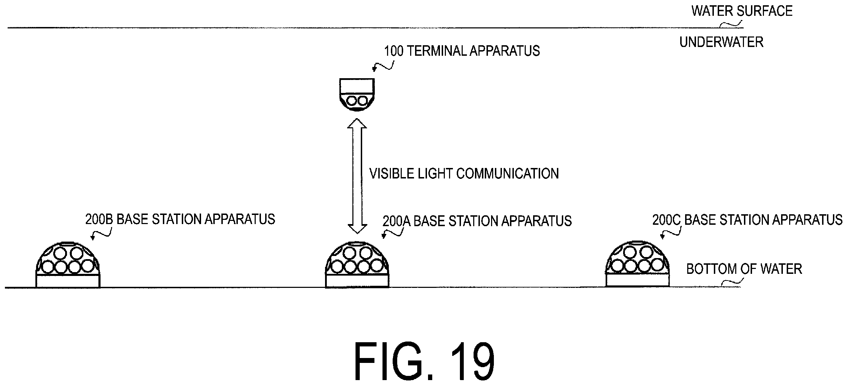

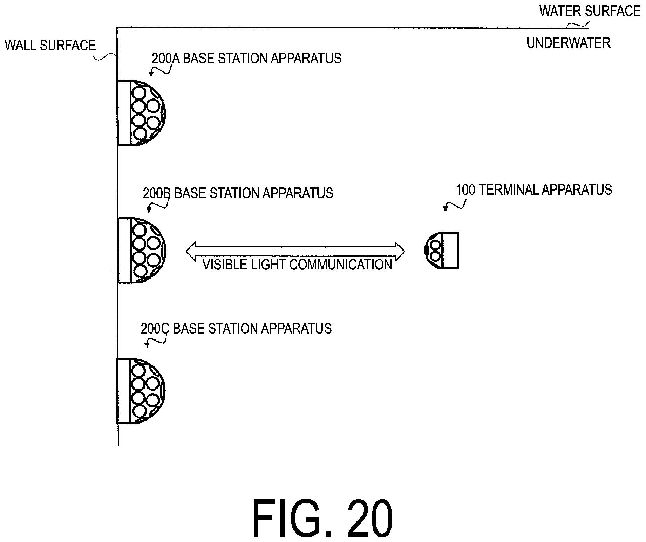

The above-described embodiments have described the example in which each base station apparatus 200 is installed underwater. However, as illustrated in FIG. 19, each base station apparatus 200 may be installed on the bottom of water. The terminal apparatus 100 moving underwater performs visible light communication with the base station apparatus 200 located below the terminal apparatus 100. Each base station apparatus 200 may be installed on an underwater wall surface as illustrated in FIG. 20. The terminal apparatus 100, while moving underwater in a vertical direction, performs visible light communication with the base station apparatus 200.

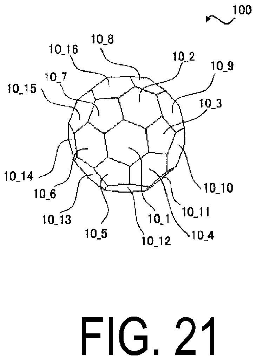

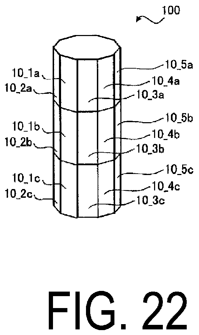

The above-described embodiments have described the example in which the light receiver/emitter 150 of the terminal apparatus 100 and the light receiver/emitter 250 of the base station apparatus 200 are formed into hemispherical shapes. However, as shown in FIG. 21, the terminal apparatus 100 may be formed into a spherical shape as a whole. For example, the terminal apparatus 100 may be formed into a polyhedron, and each face (or a region including multiple adjacent faces) of the polyhedron may form the visible light communicator 10. The base station apparatus 200 may similarly be formed into a spherical shape as a whole. As illustrated in FIG. 22, the terminal apparatus 100 may be formed into a bar shape as a whole. For example, terminal apparatus 100 may be formed into a prism shape, and a side surface of the prism may form the visible light communicator 10. The base station apparatus 200 may also be formed into a spherical shape as a whole in the same and/or similar way. That is, each of the terminal apparatus 100 and the base station apparatus 200 may include multiple visible light communicators capable of visible light communication in multiple directions.

The above-described embodiments have described the example in which handover decision and multi-base station communication decision are performed on the base station apparatus 200 side. However, the handover decision and the multi-base station communication decision may be performed on the terminal apparatus 100 side. In this case, without transmitting the report visible light signal from the terminal apparatus 100 to the base station apparatus 200, the controller 110 of the terminal apparatus 100 may decide the handover and the multi-base station communication, based on the result of the measurement or the like and notify the base station apparatus 200 of a decision result.

The operation flows described above can be separately and independently implemented, and also be implemented in combination of two or more of the operation flows. For example, some steps of one operation flow may be added to another operation flow or some steps of one operation flow may be replaced with some steps of another operation flow. The order of steps in each operation flow described above is merely an example and may be changed as appropriate.

A program that causes a computer to execute each of the processes performed by the terminal apparatus 100 or the base station apparatus 200 may be provided. The program may be recorded in a computer readable medium. Use of the computer readable medium enables the program to be installed on a computer. Here, the computer readable medium on which the program is recorded may be a non-transitory recording medium. The non-transitory recording medium is not particularly limited, and may be, for example, a recording medium such as a CD-ROM or a DVD-ROM. Circuits for executing the processes to be performed by the terminal apparatus 100 or the base station apparatus 200 may be integrated, and at least a part of the terminal apparatus 100 or the base station apparatus 200 may be configured as a semiconductor integrated circuit (a chipset or an SoC).

The phrases "based on" and "depending on" used in the present disclosure do not mean "based only on" and "only depending on," unless specifically stated otherwise. The phrase "based on" means both "based only on" and "based at least in part on". The phrase "depending on" means both "only depending on" and "at least partially depending on". "Obtain" or "acquire" may mean to obtain information from stored information, may mean to obtain information from information received from another node, or may mean to obtain information by generating the information. The terms "include", "comprise" and variations thereof do not mean "include only items stated" but instead mean "may include only items stated" or "may include not only the items stated but also other items". The term "or" used in the present disclosure is not intended to be "exclusive or". Any references to elements using designations such as "first" and "second" as used in the present disclosure do not generally limit the quantity or order of those elements. These designations may be used herein as a convenient method of distinguishing between two or more elements. Thus, a reference to first and second elements does not mean that only two elements may be employed there or that the first element needs to precede the second element in some manner. For example, when the English articles such as "a," "an," and "the" are added in the present disclosure through translation, these articles include the plural unless clearly indicated otherwise in context.

Embodiments have been described above in detail with reference to the drawings, but specific configurations are not limited to those described above, and various design variation can be made without departing from the gist of the present disclosure.

The present application claims priority to Japanese Patent Application No. 2022-068340 (filed on April 18, 2022), the contents of which are incorporated herein by reference in their entirety.

### Supplementary Note

Features relating to the embodiments described above are described below as supplements.
(1) A visible light communication system configured to perform visible light communication between a terminal apparatus and a base station apparatus, the visible light communication system including:
   the terminal apparatus including
   multiple visible light communicators including a first visible light communicator and a second visible light communicator, and
   a controller configured to control the multiple visible light communicators,
   wherein the multiple visible light communicators each have a directivity in a different direction, and
   the controller is configured to perform simultaneous communication control of the first visible light communicator and the second visible light communicator, the first visible light communicator performing visible light communication with a first base station apparatus and the second visible light communicator performing visible light communication with a second base station apparatus.
(2) The visible light communication system according to (1) above, wherein
   each of the multiple visible light communicators includes
   at least one light emitting element,
   at least one light receiving element, and
   a transceiver configured to perform transmission and reception processing on a visible light signal by using the light emitting element and the light receiving element.
(3) The visible light communication system according to (1) or (2) above, wherein
   the controller is configured to perform measurement processing on pilot visible light signals that the multiple visible light communicators receive from each of base station apparatuses while the first visible light communicator is performing visible light communication with the first base station apparatus.
(4) The visible light communication system according to (3) above, wherein
   the controller is configured to perform the measurement processing in response to a trigger condition configured by the first base station apparatus being satisfied or in response to a movement of the terminal apparatus being detected.
(5) The visible light communication system according to (3) or(4), wherein
   a pilot visible light signal of the pilot visible light signals is a visible light signal including a pilot signal sequence, and
   a base station apparatus of the base station apparatuses is configured to include the pilot signal sequence in the pilot visible light signal of the base station apparatus, the pilot signal sequence being different from the pilot signal sequence used by another base station apparatus near the base station apparatus.
(6) The visible light communication system according to (3) to (5) above, wherein
   the controller is configured to control the first visible light communicator to transmit to the first base station apparatus a report visible light signal including a result of measurement on the pilot visible light signals of the base station apparatuses.
(7) The visible light communication system according to (6) above, wherein
   the controller is configured to control the first visible light communicator to transmit the report visible light signal to the first base station apparatus in response to the result of measurement satisfying a threshold condition or in a periodic manner.
(8) The visible light communication system according to (6) or (7) above, wherein
   the multiple visible light communicators are configured to receive broadcast visible light signals from the base station apparatuses,
   a broadcast visible light signal of the broadcast visible light signals includes information indicating an orientation and/or turbulence of the base station apparatus having transmitted the broadcast visible light signal, and
   the controller is configured to correct the result of measurement depending on the information included in the broadcast visible light signal.
(9) The visible light communication system according to any one of (6) to (8) above, wherein
   the controller is configured to further include, in the report visible light signal, information indicating whether the terminal apparatus is capable of performing simultaneous communication, while communicating with the first visible light communicator, for each of base station apparatuses other than the first base station apparatus.
(10) The visible light communication system according to any one of (6) to (9) above, wherein the controller is configured to further include information indicating a movement state of the terminal apparatus in the report visible light signal.
(11) The visible light communication system according to any one of (6) to (10) above, wherein the controller is configured to determine the movement state depending on a reception status of the pilot visible light signals at the multiple visible light communicators.
(12) The visible light communication system according to any one of (6) to (11) above, wherein the controller is configured to generate association information associating a visible light communicator of the multiple visible light communicators having received a pilot visible light signal of the pilot visible light signals with the base station apparatus having transmitted the pilot visible light signal.
(13) The visible light communication system according to any one of (6) to (12) above, wherein
   the first visible light communicator is configured to receive, from the first base station apparatus, an indication visible light signal including a communication indication designating the second base station apparatus, and
   the controller is configured to
   select a visible light communicator of the multiple visible light communicators associated with the second base station apparatus, based on the association information in response to receiving the indication visible light signal, and
   establish communication with the second base station apparatus using the selected visible light communicator.
(14) The visible light communication system according to (13) above, wherein
   the indication visible light signal includes the communication indication indicating to the terminal apparatus to transmit, to the second base station apparatus, information identical to information transmitted from the terminal apparatus to the first base station apparatus, and
   the controller is configured to control the first visible light communicator and the second visible light communicator to transmit identical pieces of information to the first base station apparatus and the second base station apparatus in response to receiving the indication visible light signal.
(15) The visible light communication system according to (13) or (14), wherein
   the indication visible light signal includes the communication indication indicating to the terminal apparatus to transmit, to the second base station apparatus, information different from information transmitted from the terminal apparatus to the first base station apparatus, and
   the controller is configured to control the first visible light communicator and the second visible light communicator to transmit different pieces of information to the first base station apparatus and the second base station apparatus in response to receiving the indication visible light signal.
(16) The visible light communication system according to any one of (13) to (15) above, wherein the second base station apparatus is configured to transfer the information received by the second base station apparatus from the terminal apparatus, to the first base station apparatus, and
   the first base station apparatus is configured to perform combining processing on the information received by the first base station apparatus from the terminal apparatus and the information received by the first base station apparatus from the second base station apparatus.
(17) The visible light communication system according to any one of (12) to (16) above, wherein the controller is configured to update the association information in response to detection of a rotation of the terminal apparatus.
(18) The visible light communication system according to (17) above, wherein
   the terminal apparatus further includes a sensor to generate orientation information of the terminal apparatus, and
   the controller is configured to update the association information, based on the orientation information.
(19) The visible light communication system according to (17) or (18) above, wherein the controller is configured to
   re-execute the measurement processing in response to detection of the rotation, and
   update the association information depending on a result of the re-executed measurement processing.
(20) A terminal apparatus configured to perform visible light communication with a base station apparatus, the terminal apparatus including:
   multiple visible light communicators including a first visible light communicator and a second visible light communicator; and
   a controller configured to control the multiple visible light communicators,
   wherein
   the multiple visible light communicators each have a directivity in a different direction, and the controller is configured to perform simultaneous communication control of the first visible light communicator and the second visible light communicator, the first visible light communicator performing visible light communication with a first base station apparatus and the second visible light communicator performing visible light communication with a second base station apparatus.

### REFERENCE SIGNS

1: Visible light communication system
10: Visible light communicator
20: Visible light communicator
100: Terminal apparatus
101: Light emitting element
102: Light receiving element
103: Transceiver
110: Controller
111: Processor
112: Memory
120: Sensor
150: Light receiver/emitter
151: Light receiving/emitting region
160: Body part
200: Base station apparatus
201: Light emitting element
202: Light receiving element
203: Transceiver
210: Controller
211: Processor
212: Memory
220: Backhaul communicator
221: Network communicator
222: Inter-base station communicator
230: Sensor
240: GNSS positioner
250: Light receiver/emitter
251: Light receiving/emitting region
260: Body part

## Claims

1. A visible light communication system configured to perform visible light communication between a terminal apparatus and a base station apparatus, the visible light communication system comprising:
the terminal apparatus comprising
multiple visible light communicators comprising a first visible light communicator and a second visible light communicator, and
a controller configured to control the multiple visible light communicators,
wherein the multiple visible light communicators each have a directivity in a different direction, and
the controller is configured to perform simultaneous communication control of the first visible light communicator and the second visible light communicator, the first visible light communicator performing visible light communication with a first base station apparatus and the second visible light communicator performing visible light communication with a second base station apparatus.

2. The visible light communication system according to claim 1, wherein
each of the multiple visible light communicators comprises
at least one light emitting element,
at least one light receiving element, and
a transceiver configured to perform transmission and reception processing on a visible light signal by using the light emitting element and the light receiving element.

3. The visible light communication system according to claim 1, wherein
the controller is configured to perform measurement processing on pilot visible light signals that the multiple visible light communicators receive from each of base station apparatuses while the first visible light communicator is performing visible light communication with the first base station apparatus.

4. The visible light communication system according to claim 3, wherein
the controller is configured to perform the measurement processing in response to a trigger condition configured by the first base station apparatus being satisfied or in response to a movement of the terminal apparatus being detected.

5. The visible light communication system according to claim 3, wherein
a pilot visible light signal of the pilot visible light signals is a visible light signal comprising a pilot signal sequence, and
a base station apparatus of the base station apparatuses is configured to comprise the pilot signal sequence in the pilot visible light signal of the base station apparatus, the pilot signal sequence being different from the pilot signal sequence used by another base station apparatus near the base station apparatus.

6. The visible light communication system according to claim 3, wherein
the controller is configured to control the first visible light communicator to transmit to the first base station apparatus a report visible light signal comprising a result of measurement on the pilot visible light signals of the base station apparatuses.

7. The visible light communication system according to claim 6, wherein
the controller is configured to control the first visible light communicator to transmit the report visible light signal to the first base station apparatus in response to the result of measurement satisfying a threshold condition or in a periodic manner.

8. The visible light communication system according to claim 6, wherein
the multiple visible light communicators are configured to receive broadcast visible light signals from the base station apparatuses,
a broadcast visible light signal of the broadcast visible light signals comprises information indicating an orientation and/or turbulence of the base station apparatus having transmitted the broadcast visible light signal, and
the controller is configured to correct the result of measurement depending on the information comprised in the broadcast visible light signal.

9. The visible light communication system according to claim 6, wherein
the controller is configured to further comprise information in the report visible light signal, the information indicating whether the terminal apparatus is capable of performing simultaneous communication, while communicating with the first visible light communicator, for each of base station apparatuses other than the first base station apparatus.

10. The visible light communication system according to claim 6, wherein
the controller is configured to further comprise information indicating a movement state of the terminal apparatus in the report visible light signal.

11. The visible light communication system according to claim 10, wherein
the controller is configured to determine the movement state depending on a reception status of the pilot visible light signals at the multiple visible light communicators.

12. The visible light communication system according to claim 3, wherein
the controller is configured to generate association information associating a visible light communicator of the multiple visible light communicators having received a pilot visible light signal of the pilot visible light signals with the base station apparatus having transmitted the pilot visible light signal.

13. The visible light communication system according to claim 12, wherein
the first visible light communicator is configured to receive, from the first base station apparatus, an indication visible light signal comprising a communication indication designating the second base station apparatus, and
the controller is configured to
select a visible light communicator of the multiple visible light communicators associated with the second base station apparatus based on the association information, in response to receiving the indication visible light signal, and
establish communication with the second base station apparatus using the selected visible light communicator.

14. The visible light communication system according to claim 13, wherein
the indication visible light signal comprises the communication indication indicating to the terminal apparatus to transmit, to the second base station apparatus, information identical to information transmitted from the terminal apparatus to the first base station apparatus, and
the controller is configured to control the first visible light communicator and the second visible light communicator to transmit identical pieces of information to the first base station apparatus and the second base station apparatus in response to receiving the indication visible light signal.

15. The visible light communication system according to claim 13, wherein
the indication visible light signal comprises the communication indication indicating to the terminal apparatus to transmit, to the second base station apparatus, information different from information transmitted from the terminal apparatus to the first base station apparatus, and
the controller is configured to control the first visible light communicator and the second visible light communicator to transmit different pieces of information to the first base station apparatus and the second base station apparatus in response to receiving the indication visible light signal.

16. The visible light communication system according to claim 14 or 15, wherein
the second base station apparatus is configured to transfer the information received by the second base station apparatus from the terminal apparatus, to the first base station apparatus, and
the first base station apparatus is configured to perform combining processing on the information received by the first base station apparatus from the terminal apparatus and the information received by the first base station apparatus from the second base station apparatus.

17. The visible light communication system according to claim 12, wherein
the controller is configured to update the association information in response to detection of a rotation of the terminal apparatus.

18. The visible light communication system according to claim 17, wherein
the terminal apparatus further comprises a sensor to generate orientation information of the terminal apparatus, and
the controller is configured to update the association information, based on the orientation information.

19. The visible light communication system according to claim 17, wherein
the controller is configured to
re-execute the measurement processing in response to detection of the rotation, and
update the association information depending on a result of the re-executed measurement processing.

20. A terminal apparatus configured to perform visible light communication with a base station apparatus, the terminal apparatus comprising:
multiple visible light communicators comprising a first visible light communicator and a second visible light communicator; and
a controller configured to control the multiple visible light communicators,
wherein the multiple visible light communicators each have a directivity in a different direction, and
the controller is configured to perform simultaneous communication control of the first visible light communicator and the second visible light communicator, the first visible light communicator performing visible light communication with a first base station apparatus and the second visible light communicator performing visible light communication with a second base station apparatus.
